# EUROPEAN PATENT APPLICATION

(11) **EP 1 871 102 A2**
(43) Date of publication of application: **26.12.2007**
(21) Application number: 07110546.4
(22) Date of filing: 19.06.2007
(51) Int. Cl.: H04N 5/44

(54) **Digital broadcast receiving terminal and method of reproducing digital broadcast thereof**

(30) Priority: 21.06.2006 KR 20060055868
(71) Applicant: LG Electronic Inc., Seoul 150-721 (KR)
(72) Inventor: Lee, Jin Hyung, Kumchon-gu 153-801 SEOUL (KR)
(74) Representative: Cabinet Plasseraud

(57) **Abstract**

A digital broadcast receiving terminal and method of reproducing a digital broadcast thereof are disclosed, by which synchronism between a digital broadcast reproduced by a receiving end and additional information associated with the digital broadcast can be controlled. According to an embodiment, the method includes receiving the digital broadcast and additional information associated with the digital broadcast from a digital broadcast network, obtaining output speed adjustment information for the additional information, and outputting the additional information by considering the additional information output speed adjustment information when the digital broadcast is output.

## Description

This application claims the benefit of the Korean Patent Application No. 10-2006-0055868, filed on June 21, 2006 in Republic of Korea, which is hereby incorporated by reference as if fully set forth herein.

### BACKGROUND OF THE INVENTION

### Field of the Invention

The present invention relates to digital broadcasting, and more particularly, to a digital broadcast receiving terminal and method of reproducing a digital broadcast thereof. Although the present invention is suitable for a wide scope of applications, it is particularly suitable for receiving and reproducing additional information associated with a digital broadcast.

### Discussion of the Related Art

Recently, owing to the technological convergence and development of communication and broadcasting, digital broadcasting can be enjoyed at a specific time while a viewer is moving, let alone a fixed place and a scheduled time. Specifically, satellite digital multimedia broadcasting (S-DMB) has launched in Republic of Korea since 2005, May. And, it is expected that digital broadcasting will be globally serviced in various ways. To keep up with this trend, various kinds of mobile terminals equipped with digital broadcast receiving functions have been marketed.

Digital broadcasting can be mainly categorized into a video broadcast, an audio broadcast, and a data broadcast. Additional information associated with the video or audio broadcast is provided in a format of the data broadcast. For instance, when a song is provided as an audio broadcast, the words of the song are provided as additional information in a text format.

Yet, it frequently happens that synchronism between the provided words and the song listened to via a speaker does not match (i.e., asynchronism). In particular, when the words are sequentially displayed as text information on a screen of a terminal, a temporal gap may exist between audio information and text information due to the asynchronism.

The asynchronism may be attributed to the fact that the data collecting speed of the terminal is variable according to the frequent variation of a channel environment, the fact that each currently marketed digital broadcast receiver differs in a speed in processing data received from a digital broadcast network, the fact that each digital broadcast receiver employs a different user interface, and the like. Moreover, since a broadcasting station, which provides a digital broadcast, keeps transmitting the additional information by ignoring the user's readability, the asynchronism between an audio outputted via the speaker the user's terminal and an image or text displayed on a screen of the terminal becomes the more serious problem.

The asynchronism arouses a temporal gap between text information as visual information (words of song) and audio information as auditory information (song) to cause information confusion or inconvenience to the user. Namely, the discordance between the auditory song and the visual words inevitably causes inconvenience and discomfort to the user.

### SUMMARY OF THE INVENTION

Accordingly, the present invention is directed to a digital broadcast receiving terminal and method of reproducing a digital broadcast thereof that substantially obviate one or more problems due to limitations and disadvantages of the related art.

An object of the present invention is to provide a digital broadcast receiving terminal and method of reproducing a digital broadcast thereof, by which synchronism between a digital broadcast reproduced by a receiving end and additional information associated with the digital broadcast can be controlled.

Another object of the present invention is to provide a digital broadcast receiving terminal and method of reproducing a digital broadcast thereof, by which various control methods including a manual control method according to a user's command, an automatic control method using information transmitted from a digital broadcast network, and the like are provided to control synchronism between a digital broadcast and additional information in a receiving end and by which the user is able to select a specific control method according to the user's taste or preference.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of reproducing a digital broadcast in a digital broadcast receiving terminal according to an aspect of the present invention includes receiving the digital broadcast and additional information associated with the digital broadcast from a digital broadcast network, obtaining output speed adjustment information for the additional information, and outputting the additional information by considering the additional information output speed adjustment information when the digital broadcast is output.

In another aspect of the present invention, a method of reproducing a digital broadcast in a digital broadcast receiving terminal includes receiving the digital broadcast and additional information associated with the digital broadcast from a digital broadcast network, the additional information including output speed information, and outputting the received digital broadcast and the received additional information in accordance with a speed according to the output speed information.

In another aspect of the present invention, a digital broadcast receiving terminal includes a digital broadcast receiving unit receiving a digital broadcast and additional information associated with the digital broadcast from a digital broadcast network, a display unit outputting a broadcast video, an audio output unit outputting a broadcast audio, and a processing unit configured to extract the broadcast video and the broadcast audio from the received digital broadcast, output the extracted broadcast video and audio via the display unit and the audio output unit, respectively, and output the received additional information via the display unit in accordance with additional information output speed adjustment information.

In another aspect of the present invention, a digital broadcast receiving terminal includes a digital broadcast receiving unit receiving a digital broadcast and additional information associated with the digital broadcast from a digital broadcast network, the additional information including output speed information, a display unit outputting a broadcast video, an audio output unit outputting a broadcast audio, and a processing unit configured to extract the broadcast video and the broadcast audio from the received digital broadcast, to output the extracted broadcast video and audio via the display unit and the audio output unit, respectively, and to output the received additional information via the display unit at a speed according to the output speed information of the received additional information.

In another aspect of the present invention, a digital broadcast receiving device includes a receiving unit to receive a digital broadcast and additional information associated with the digital broadcast; an input unit to receive a user's input; at least one output unit to output the digital broadcast and the associated additional information to the user; and a controller to receive output speed information associated with the additional information, wherein the output speed information includes at least two output speeds respectively for different portions of the additional information, and wherein the controller continuously adjusts an output speed of the additional information according to the at least two output speeds of the output speed information.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a schematic block diagram of a digital broadcast receiver according to an embodiment of the present invention;

FIG. 2 is a flowchart of a method of controlling synchronism between a digital broadcast and additional information according to a first embodiment of the present invention;

FIG. 3 is a structural diagram of a DAB audio frame according to Eureka-147;

FIG. 4 is a diagram of an example of a screen for controlling synchronism between a digital broadcast and additional information according to the first embodiment of the present invention; and

FIG. 5 is a flowchart of a method of controlling synchronism between a digital broadcast and additional information according to a second embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

Examples of digital broadcasting to which the present invention is applicable include, but are not limited to, Eureka-147 based European DAB (digital audio broadcasting) and DVB-H (digital video broadcasting-handheld), Media FLO (forward link only) led by U.S. Qualcomm Co., Korean DMB (digital multimedia broadcasting), Japanese ISDB-T (integrated service digital broadcasting-terrestrial), etc. Korean DMB is classified into Eureka-147 based T-DMB (terrestrial-digital multimedia broadcasting) and S-DMB (satellite-digital multimedia broadcasting) using satellite communication. Details of specifications of each digital broadcasting are omitted in the following description.

In the above examples, they mainly belong to mobile digital broadcasting. This, however, does not restrict the application of the present invention. So, the present invention is applicable to the following fixed type digital broadcasting. For example, the fixed type digital broadcasting includes U.S. digital TV standard (ATSC) 8-VSB developed by U.S. Zenith Co., European DVB-T (digital video broadcasting-terrestrial), and the like. Thus, the present invention is applicable to both of the mobile digital broadcasting and the fixed type digital broadcasting.

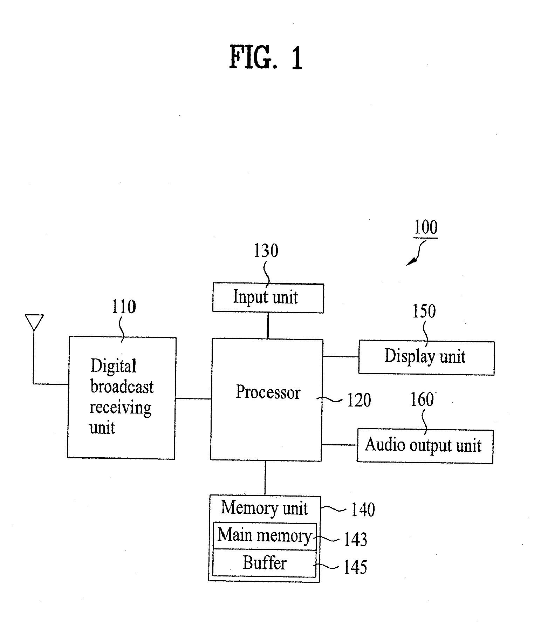

A digital broadcast receiving terminal according to one embodiment of the present invention is explained with reference to FIG. 1 as follows.

FIG. 1 is a schematic block diagram of a digital broadcast receiving terminal (or mobile terminal) according to the present invention.

Referring to FIG. 1, a digital broadcast receiving terminal 100 according to one embodiment of the present invention includes a digital broadcast receiving unit 110, a processor 120, an input unit 130, a memory unit 140 including a main memory 143 and a buffer 145, a display unit 150, and an audio output unit 160.

Of course, the digital broadcasting receiving terminal according to the present invention can be provided with other various additional elements (e.g., a mobile communication module) as well as the aforesaid elements. Yet, since the additional elements are not directly associated with the present invention, explanations for the additional elements will be omitted in the following description for the sake of brevity. Meanwhile, in case of implementing the elements of the present invention for the real application, it is to be understood that at least two elements can be combined to configure one element or one element can be divided into at least two elements. All the components of the digital broadcast receiving terminal are operatively coupled and configured.

The digital broadcast receiving unit 110 is a device for receiving a digital broadcast via a digital broadcast network and additional signals associated with the digital broadcast.

The input unit 130 is an input device for receiving various information or commands from a user and can be implemented with a keypad including various numeral keys, direction keys, and the like, and/or a touchscreen.

The memory unit 140 preferably includes the main memory 143 and the buffer 145. The main memory 143 stores one or more prescribed programs for controlling the overall operations of the digital broadcast receiving terminal according to the present invention. And the main memory 143 also stores data inputted/outputted or processed when the overall operation of the digital broadcast receiving terminal is carried out by the processor 120. Before additional information received via the digital broadcast network is outputted, the buffer 145 temporarily stores the received additional information. Optionally, the buffer 145 can be loaded in the processor 120 if necessary. The memory unit 140 can include other storage unit(s).

The display unit 150, (e.g., an LCD panel) is a device for displaying a status or various information of the digital broadcast receiving terminal and broadcast images of the digital broadcast received via the digital broadcast receiving unit 110.

The audio output unit 160 (e.g., a speaker) is an audio output device for outputting audio information such as voice and the like and a broadcast sound of the digital broadcast received via the digital broadcast receiving unit 110.

The processor 120 controls the above-explained elements of the terminal 100 and collectively manages the overall operations of the digital broadcast receiving terminal 100. In particular, the processor 120 decodes a broadcast video signal and a broadcast audio signal included in the digital broadcast received from the digital broadcast receiving unit 110, and an additional information signal associated with the digital broadcast. Further, the processor 120 outputs each of the decoded signals via an output device matching the characteristic of the corresponding signal. For instance, the decoded broadcast video signal and the decoded additional signal are outputted via the display unit 150, and the decoded broadcast audio signal is outputted via the audio output unit 160.

A digital broadcast reproducing method according to the present invention can be performed by the above-configured digital broadcast receiving terminal provided with a digital broadcast receiving module capable of receiving a digital broadcast signal via a digital broadcast network. A method for controlling synchronism between a digital broadcast and additional information in a digital broadcast reproducing method according to the present invention is explained for each embodiment with reference to the digital broadcast receiving terminal shown in FIG. 1, as follows. However, these methods of the present invention can be implemented by other suitable digital broadcast receiving terminals or devices.

### [0038] First Embodiment

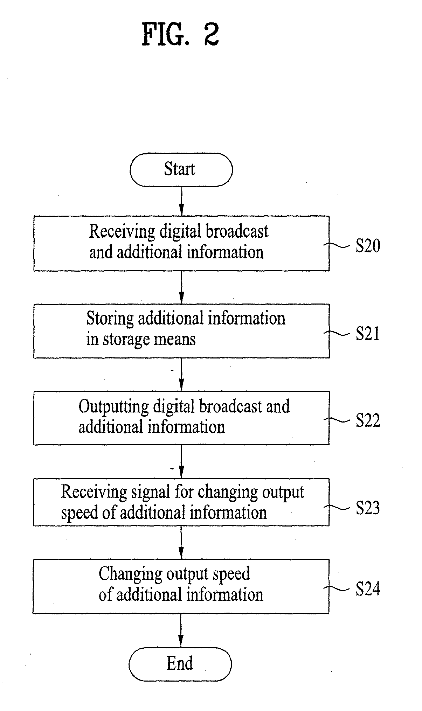

A method of controlling synchronism between a digital broadcast and additional information according to a first embodiment of the present invention is explained in detail with reference to FIGs. 2 to 4 as follows.

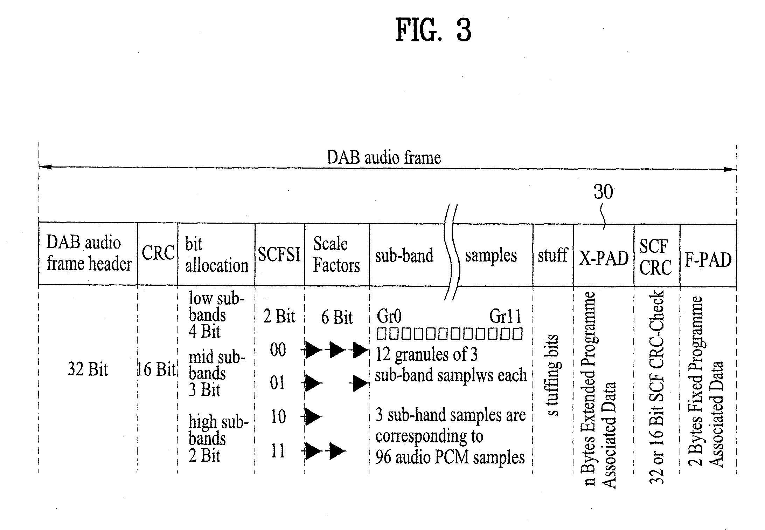

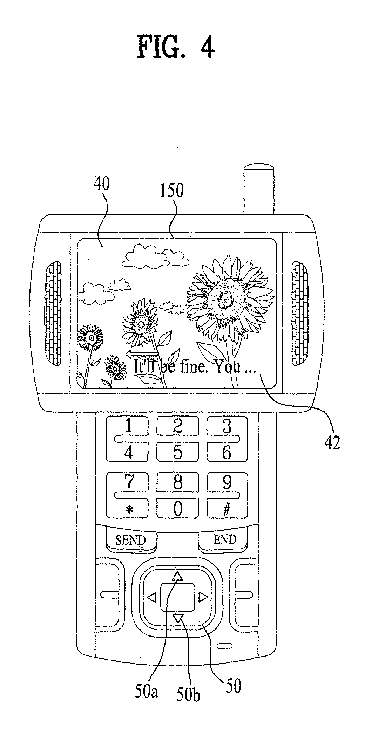

FIG. 2 is a flowchart of a method of controlling synchronism between a digital broadcast and additional information according to the first embodiment of the present invention, FIG. 3 is a structural diagram of a DAB audio frame according to Eureka-147, and FIG. 4 is an example of a screen for controlling synchronism between a digital broadcast and additional information according to the first embodiment of the present invention.

First of all, a digital broadcast and additional information associated with the digital broadcast are received from a digital broadcast network via the digital broadcast receiving unit 110 [S20]. Preferably, the digital broadcast includes an audio broadcast. This, however, does not restrict the scope of the present invention. That is, the digital broadcast includes an audio broadcast and/or a video broadcast. The additional information can include an image or text information associated with the content of the received digital broadcast. In step S20, for example, while a music broadcast (digital broadcast) is received, image information (additional information) such as photograph information for a singer or album associated with the music broadcast and text information (additional information) such as words of a song are received.

Meanwhile, the additional information can be transmitted after having been synchronized with the digital broadcast by a server that provides the digital broadcast.

An example of transmitting additional information is explained using a DAB audio frame according to Eureka-147 as follows.

First of all, X-PAD (extended programme associated data) 30 shown in FIG. 3 is a data field to provide a listener with additional information such as text, associated information, and the like together with audio information. The length of the X-PAD 30 is selected by a service provider. In particular, in case that the DAB audio frame is transmitted according to Eureka-147, the X-PAD 30 is capable of carrying additional image information such as a singer's photograph and an album photograph or additional text information such as song words.

Returning to FIG. 2, the processor 120 controls the received additional information to be stored in a storage means/unit (e.g., memory unit 140) provided to the terminal [S21]. Preferably, the storage means includes a temporary memory such as the buffer 145. To control the synchronism between the digital broadcast and the additional information according to the present invention, an output speed of the additional information is adjusted by the digital broadcast receiving terminal (cf. S23 and S24). Yet, a data receiving speed in receiving the additional information in step S20 may differ from a data output speed of outputting the additional information from the terminal. To buffer the difference, preferably the storage means is used.

Subsequently, when the processor 120 outputs the received digital broadcast, the processor 120 reads from the storage means the additional information matching the digital broadcast being outputted, and then outputs the additional information, e.g., via the display unit 150[S22].

FIG. 4 shows an exemplary screen illustrating outputting of the audio broadcast and the associated additional information in step S22. The additional information as shown in FIG. 4 may include image information 40 of a singer or song associated with the outputted audio broadcast and song words (lyric) information 42. The audio broadcast (e.g., sounds of the song) is outputted via the audio output unit 160. Text information in the additional information can be displayed on a prescribed position of the display unit 150 in a manner of being scrolled in one direction. FIG. 4 exemplarily shows that the lyric information 42 as text information is displayed on a lower end of the display unit 150 by being scrolled right to left. Other examples are possible.

Subsequently, the processor 120 receives a signal for changing an output speed of the additional information, (e.g., a signal containing additional information output speed adjustment information) from a user via the input unit 130 [S23]. For instance, if the scroll speed of the lyric information 42 fails to coincide with the output speed of the audio broadcast (e.g., song being played) outputted via the audio output unit 160 in step S22, the user is able to input the additional information output speed adjustment information to change the scroll speed of the lyric information 42 being displayed by using, for example, a direction key 50 of the digital broadcast receiving terminal. For another instance, in case of attempting to adjust the scroll speed of the lyric information 42 to fit the user's taste regardless of the synchronism between the scroll speed of the lyric information 42 and the output speed of the audio broadcast, the user can input the additional information output speed adjustment information.

Subsequently, the processor 120 changes the output speed of the additional information in correspondence to the received signal (additional information output speed adjustment information) [S24]. For instance, if the user presses a button 50a assigned to an upper direction to raise the scroll speed of the lyric information 42, the processor 120 raises the scroll speed of the lyric information 42 to increase the output speed of the lyric information 42. As a result, the lyric information 42 is scrolled through faster on the screen. For another instance, if the user presses a button 50b assigned to a lower direction, the processor 120 lowers the scroll speed of the lyric information 42 to reduce the output speed of the lyric information 42, i.e., the additional information. The additional information is not limited to the lyric information 42.

Meanwhile, it can be considered that the server side for providing the digital broadcast provides the additional information output speed adjustment information to the digital broadcast receiving terminal together with the additional information. For instance, in case that a song is provided via a digital broadcast, the additional information output speed adjustment information for the song can be prepared in advance by considering whether the song is fast overall or which part of the song is fast or slow. A specific zone of the DAB audio frame can be allocated and the prepared additional information output speed adjustment information can be provided in the allocated specific zone and transmitted to the broadcast receiving terminal via the allocated specific zone. Only as an example, the specific zone may be the data field 30 in FIG. 3. If the additional information output speed adjustment information is provided to the digital broadcast receiving terminal together with the additional information, the additional information can be displayed on the terminal by being automatically synchronized with the song without a user's separate terminal manipulation. For instance, the scroll speed of the lyric information 42 may be automatically and continuously adjusted according to the additional information output speed adjustment information received from the server or other entity.

### [0051] Second Embodiment

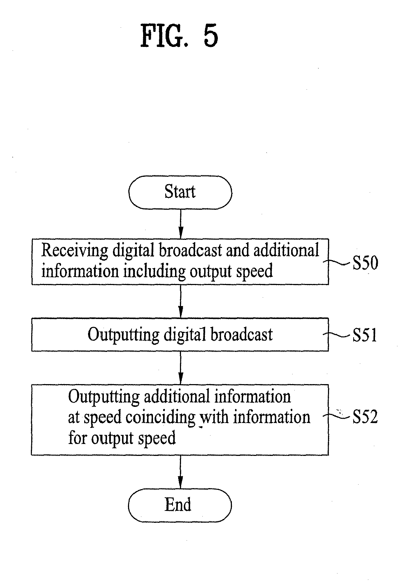

A method of controlling synchronism between a digital broadcast and additional information according to a second embodiment of the present invention is explained with reference to FIG. 5.

FIG. 5 is a flowchart of a method of controlling synchronism between a digital broadcast and additional information according to the second embodiment of the present invention.

Referring to FIG. 5, a digital broadcast and additional information associated with the digital broadcast and including information for an output speed are received from a digital broadcast network (e.g., a server or station) via the digital broadcast receiving unit 110 [S50].

Detailed features of the digital broadcast and the additional information are identical to those as explained in the first embodiment of the present invention. Yet, the method of matching the synchronism between the digital broadcast and the additional information according to the second embodiment of the present invention differs from that of the first embodiment of the present invention in that the additional information received by the receiving unit 110 includes information for the output speed.

Preferably, the information for the output speed is information for a specific speed at which the additional information should be outputted from the digital broadcast receiving terminal for the synchronism between the digital broadcast and the additional information. In this regard, the output speed information and the additional information output speed adjustment information may be the same or similar. The specific speed may be variable or constant during one song. That is, one output speed may be provided for the entire song, or different multiple speeds respectively for different portions of the song may be provided. For instance, an information zone about an output speed of additional information included in X-PAD may be prepared in a DAB audio frame, and one of 0~7 (e.g., bit values) can be carried by the allocated information zone. For instance, if 0 is included in the allocated information zone, an output speed of additional information received by the terminal is a lowest one since the transmitted DAB audio broadcast is a music of very slow tempo. In another example, if 7 is included in the allocated information zone, an output speed of additional information received by the terminal is a highest one since the transmitted DAB audio broadcast is a music of very fast tempo. Other examples are possible.

Subsequently, the processor 120 outputs the received digital broadcast [S51] and outputs the received additional information at the speed coinciding with the received information for the output speed [S52]. That is, the terminal 100 automatically adjusts the output speed of the additional information according to the output speed(s) set in the output speed information received through the receiving unit 110.

In the aforesaid first embodiment of the present invention, the received additional information is outputted at the speed set according to terminal performance, channel environments, etc. And, the output speed of the additional information can be adjusted by the user or in accordance with the additional information output speed adjustment information provided by the digital broadcast server. The second embodiment of the present invention may further differ from the first embodiment of the present invention in that the digital broadcast server may output the additional information at the output speed specified by the digital broadcast server.

In the above-explained embodiments of the present invention, the audio broadcast is mainly discussed. Yet, the present invention is applicable to a video broadcast as well as the audio broadcast. For instance, the present invention is applicable to a case that associated additional information is simultaneously provided in the course of providing a video broadcast on a movie channel. In particular, caption is provided as additional information in servicing a foreign movie. In doing so, an output speed of the caption (additional information) can be adjusted or modified by the present invention. So, a user is able to arbitrarily or preferably adjust the output speed of the caption via key manipulation and the like. Meanwhile, if a video broadcast provider sends information for the output speed of the caption, the terminal is able to automatically adjust the output speed of the caption in accordance with the information for the output speed of the caption.

Only as examples, the digital broadcast receiving terminal/device can be, but is not limited to, a mobile phone, a PDA, a smart phone, a PMP, a DMB terminal, etc.

Accordingly, the present invention provides the following effects or advantages.

First of all, according to the present invention, in addition to synchronization in a transmitting side of a digital broadcast, a receiving side (e.g., a user at the terminal) is able to control synchronism between the digital broadcast and associated additional information.

Secondly, according to the present invention, since the receiving side controls synchronism between a digital broadcast and additional information, the synchronism between the digital broadcast and the additional information can be arbitrarily adjusted regardless of a variation of a channel characteristic of a broadcast network, a model of a terminal, and a type of a user interface.

Thirdly, the present invention provides a manual control method in correspondence to a user's command ('manual mode') and an automatic control method using information transmitted from a digital broadcast network ('automatic mode'), thereby enabling a user to select a specific control method according to the user's taste. In this regard, the user may be able to set/adjust the settings of the terminal to select between such 'manual mode' and the 'automatic mode'.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of reproducing a digital broadcast in a digital broadcast receiving terminal, comprising:
receiving the digital broadcast and additional information associated with the digital broadcast from a digital broadcast network;
obtaining output speed adjustment information for the additional information; and
outputting the additional information by considering the additional information output speed adjustment information when the digital broadcast is output.

2. The method of claim 1, wherein the additional information output speed adjustment information is inputted by a user of the terminal.

3. The method of claim 1, wherein the additional information output speed adjustment information is received from the digital broadcast network.

4. The method of claim 1, wherein the receiving step further comprises the step of storing the received additional information in the terminal.

5. The method of claim 1, wherein the outputting step comprises the step of changing an output speed of the additional information according to the additional information output speed adjustment information.

6. A method of reproducing a digital broadcast in a digital broadcast receiving terminal, comprising:
receiving the digital broadcast and additional information associated with the digital broadcast from a digital broadcast network, the additional information including output speed information; and
outputting the received digital broadcast and the received additional information at a speed provided in the output speed information.

7. The method of claim 6, further comprising storing the received additional information in the terminal.

8. The method of claim 6, wherein the output speed information is provided in a DAB audio frame.

9. A digital broadcast receiving terminal, comprising:
a digital broadcast receiving unit to receive a digital broadcast and additional information associated with the digital broadcast from a digital broadcast network;
a display unit to output a broadcast video;
an audio output unit to output a broadcast audio; and
a processing unit configured to extract the broadcast video and the broadcast audio from the received digital broadcast, to output the extracted broadcast video and audio via the display unit and the audio output unit, respectively, and to output the received additional information via the display unit in accordance with additional information output speed adjustment information.

10. The digital broadcast receiving terminal of claim 9, further comprising an input unit, wherein the additional information output speed adjustment information is inputted by a user of the terminal via the input unit.

11. The digital broadcast receiving terminal of claim 9, wherein the additional information output speed adjustment information is received by the digital broadcast receiving unit from the digital broadcast network and then provided to the processing unit.

12. The digital broadcast receiving terminal of claim 9, wherein the processing unit includes a buffer for storing the received additional information temporarily.

13. The digital broadcast receiving terminal of claim 12, wherein the processing unit changes an output speed of the additional information by adjusting a speed in reading the additional information from the buffer in accordance with the additional information output speed adjustment information.

14. A digital broadcast receiving terminal, comprising:
a digital broadcast receiving unit to receive a digital broadcast and additional information associated with the digital broadcast from a digital broadcast network, the additional information including output speed information;
a display unit to output a broadcast video;
an audio output unit to output a broadcast audio; and
a processing unit configured to extract the broadcast video and the broadcast audio from the received digital broadcast, to output the extracted broadcast video and audio via the display unit and the audio output unit, respectively, and to output the received additional information via the display unit at a speed provided in the output speed information of the received additional information.

15. The digital broadcast receiving terminal of claim 14, further comprising a buffer for storing the received additional information temporarily.

16. The digital broadcast receiving terminal of claim 15, wherein the processing unit reads the additional information stored in the buffer at the speed provided in the output speed information of the additional information.

17. A digital broadcast receiving device comprising:
a receiving unit to receive a digital broadcast and additional information associated with the digital broadcast;
an input unit to receive a user's input;
at least one output unit to output the digital broadcast and the associated additional information to the user; and
a controller to receive output speed information associated with the additional information,
wherein the output speed information includes at least two output speeds respectively for different portions of the additional information, and
wherein the controller continuously adjusts an output speed of the additional information according to the at least two output speeds of the output speed information.

18. The device according to claim 17, wherein the controller receives the output speed information manually from the user through the input unit.

19. The device according to claim 17, wherein the controller receives the output speed information from a network server.

20. The device according to claim 19, wherein the controller receives the output speed information as part of the associated additional information.
